# EUROPEAN PATENT SPECIFICATION

(11) **EP 2 708 390 B1**
(45) Date of publication and mention of the grant of the patent: **20.12.2017**
(21) Application number: 12782344.1
(22) Date of filing: 17.04.2012
(51) Int. Cl.: B60H 1/00, B60H 1/32, F25B 40/00, F28D 9/02, F28D 7/00, F28D 21/00

(54) **VEHICLE AIR-CONDITIONING APPARATUS**
FAHRZEUGKLIMAANLAGE
APPAREIL DE CLIMATISATION POUR VÉHICULE

(30) Priority: 11.05.2011 JP 2011106641
(43) Date of publication of application: 19.03.2014
(73) Proprietor: Valeo Japan Co., Ltd., Saitama 360-0193 (JP)
(72) Inventor: ARAKI, Daisuke, Kumagaya-shi, Saitama 360-0193 (JP); TSUJI, Teruaki, Kumagaya-shi, Saitama 360-0193 (JP); KOIKE, Takao, Kumagaya-shi, Saitama 360-0193 (JP); AKAHOSHI, Mitsuhiko, Kumagaya-shi, Saitama 360-0193 (JP); HAYASHI, Naoto, Kumagaya-shi, Saitama 360-0193 (JP)
(74) Representative: Metz, Gaëlle
(86) International application number: PCT/JP2012/060373
(87) International publication number: WO 2012/153610

(56) References cited:
- EP-A1- 2 009 380
- EP-A1- 2 172 720
- EP-A2- 1 867 944
- JP-A- 10 103 812
- JP-A- 10 236 149
- JP-A- 2002 243 374
- JP-A- 2007 055 553
- JP-A- 2007 055 553
- JP-A- 2007 131 171
- JP-A- 2010 149 813
- JP-A- 2011 007 463

## Description

### Technical Field

The present invention relates to a vehicle air-conditioning apparatus and relates particularly to a vehicle air-conditioning apparatus including an internal heat exchanger.

### Background Art

A vehicle air-conditioning apparatus is generally provided with a refrigeration cycle including at least a compressor compressing a cooling medium in a vaporized state and discharging the cooling medium, a condenser cooling the cooling medium discharged from the compressor and condensing the cooling medium, an expansion valve converting the cooling medium condensed by the condenser into a gas/liquid mixture by a squeezing action, and an evaporator cooling and dehumidifying air with the evaporation heat of the cooling medium converted into the gas/liquid mixture by the expansion valve. Some refrigeration cycles are further provided with an internal heat exchanger which performs heat exchange between a high-temperature and high-pressure cooling medium condensed by the condenser and a low-temperature and low-pressure cooling medium evaporated by the evaporator from the viewpoint of enhancing the capacity of the refrigeration cycle (see, for example Patent Literatures 1 to 3). Patent Literatures 1 and 2 each disclose a double-channel internal heat exchanger in which piping through which the high-temperature and high-pressure cooling medium is flowed and piping through which a low-temperature and low-pressure cooling medium is flowed are concentrically arranged. Patent Literature 3 discloses a lamination type of internal heat exchanger in which a passage through which a high-temperature and high-pressure cooling medium is flowed and a passage through which a low-temperature and low-pressure cooling medium is flowed are alternately formed.

### Citation List

### Patent Literature

Patent Literature 1: Japanese Patent Laid-Open Publication No. 2008-149812
Patent Literature 2: Japanese Patent Laid-Open Publication No. 2008-207630
Patent Literature 3: Japanese Patent Laid-Open Publication No. 2010-255945
Document JP2007 055553 A, which is considered as the closest prior art, discloses a vehicle air-conditioning apparatus according to the preamble of independent claim 1.

### Summary of Invention

### Technical Problem

Since the double-channel internal heat exchangers including those disclosed in Patent Literatures 1 and 2 have a heat transfer area smaller than that of the lamination type of internal heat exchanger, the heat exchange capability is low, and there is a problem that the length of a double channel is required to be increased in order to obtain a high heat exchange effect. Thus, there is a problem that a special space for the internal heat exchanger is required to be secured wherever the internal heat exchanger is to be installed.

Recently, with enlargement of a vehicle interior (a crew space or a cabin), an engine room tends to be reduced in size and congested. Accordingly, it is difficult to secure a space for the internal heat exchanger even when the lamination type of internal heat exchanger which is more space-saving than the double-channel internal heat exchanger is disposed in the engine room. When the lamination type of internal heat exchanger is disposed in the engine room, a bracket is required; therefore, cost is increased, and further, there is a problem that a process of assembling the bracket to a vehicle is added.

However, although a configuration of the lamination type of internal heat exchanger including Patent Literature 3 has been disclosed, there is no disclosure of how the lamination type of internal heat exchanger is disposed in a vehicle.

It is an object of the present invention is to provide a vehicle air-conditioning apparatus which can reduce the number of processes of mounting a lamination type of internal heat exchanger, is easily attachable, and is space saving. It is another object of the invention to provide a vehicle air-conditioning apparatus which is not required a bracket used in the mounting of the internal heat exchanger to suppress increase in cost.

### Solution to Problem

In a vehicle air-conditioning apparatus according to the present invention comprising: a case having a ventilation flow path for blowing air therein and disposed in a vehicle interior; a blower unit configured to form the blowing air; an evaporator performing heat exchange with the blowing air; an internal heat exchanger performing heat exchange between a condensed high-temperature and high-pressure cooling medium in a refrigeration cycle and an evaporated low-temperature and low-pressure cooling medium; and a cooling medium expansion unit disposed between the internal heat exchanger and the evaporator, the internal heat exchanger has a laminate structure in which a high-pressure side cooling medium flow path through which the high-temperature and high-pressure cooling medium is flowed and a low-pressure side cooling medium flow path through which the low-temperature and low-pressure cooling medium is flowed are alternately arranged in a line, and the internal heat exchanger is stored in the case and disposed in a region between the evaporator and a firewall or a toe board, wherein the case has a partition wall, and the internal heat exchanger is disposed in a space separated from the ventilation flow path by the partition wall.

In the vehicle air-conditioning apparatus according to the present invention, the case has a partition wall, and the internal heat exchanger is disposed in a space separated from the ventilation flow path by the partition wall. Propagation of flow noise of the internal heat exchanger can be suppressed. Since the internal heat exchanger is not in contact with blowing air, the efficiency of heat exchange is further enhanced, and, at the same time, an amount of dew condensation water generated on a surface of the internal heat exchanger can be reduced.

In the vehicle air-conditioning apparatus according to the present invention, the low-pressure side cooling medium flow path is preferably located at the outermost side of the laminate structure. The flow resistance of the cooling medium can be reduced.

In the vehicle air-conditioning apparatus according to the present invention, it is preferable that the blower unit is disposed above the evaporator, and the internal heat exchanger is disposed outside a ventilation flow path communicating from the blower unit to the evaporator. In a so-called full center type of air conditioner, since the internal heat exchanger is not in contact with blowing air, the efficiency of heat exchange is further enhanced, and, at the same time, an amount of dew condensation water generated on a surface of the internal heat exchanger can be reduced.

In the vehicle air-conditioning apparatus according to the present invention, it is preferable that the blower unit is disposed to the right side or left side in a vehicle width direction of the evaporator, and the partition wall serves as a rectifying guide of the blowing air. In a so-called semi-center type of air conditioner, volumes of air blown out from left and right blowout ports can be balanced.

In the vehicle air-conditioning apparatus according to the present invention, it is preferable that the blower unit is disposed to the right side or left side in the vehicle width direction of the evaporator, and in the vehicle width direction, the cooling medium expansion unit is disposed to the opposite side to which the blower unit is disposed. In a so-called semi-center type of air conditioner, a dead space is effectively used, thereby making it possible to contribute to space saving.

In the vehicle air-conditioning apparatus according to the present invention, the internal heat exchanger and the evaporator are preferably connected to each other through a plate and/or a piping. By virtue of elimination of an accumulator between the internal heat exchanger and the evaporator, a case can be miniaturized.

### Advantageous Effects of Invention

The present invention can provide a vehicle air-conditioning apparatus which can reduce the number of processes of mounting a lamination type of internal heat exchanger, is easily attachable, and is space saving. The present invention can further provide a vehicle air-conditioning apparatus which is not required a bracket used in the mounting of the internal heat exchanger to suppress increase in cost.

### Brief Description of Drawings

FIG. 1 is a schematic view showing a refrigeration cycle of a vehicle air-conditioning apparatus according to the present embodiment.
FIG. 2 is a pattern diagram showing a disposition example of an internal heat exchanger.
FIG. 3 is schematic views showing examples of a lamination type of internal heat exchanger in which (a) is a perspective view and (b) is an A-A fracture cross sectional view of (a).
FIG. 4 is schematic views showing other examples of the lamination type of internal heat exchanger in which (a) is a front view and (b) is a B-B fracture cross sectional view of (a).
FIG. 5 is a schematic view showing a disposition example of the internal heat exchanger in a semi-center type of vehicle air-conditioning apparatus.
FIG. 6 is schematic views showing disposition examples of the internal heat exchanger in a full-center type of vehicle air-conditioning apparatus in which (a) shows a form in which the internal heat exchanger is disposed in a lower stage and (b) shows a form in which the internal heat exchanger is disposed in an intermediate stage.

### Description of Embodiments

Hereinafter, an aspect of the present invention will be described with reference to the accompanying drawings. An embodiment to be described below is an example of the present invention, and the invention is not limited to the following embodiment. Components denoted by the same reference numerals in the present specification and the drawings mutually denote the same components. An embodiment may be variously modified as long as the effects of the present invention are provided.

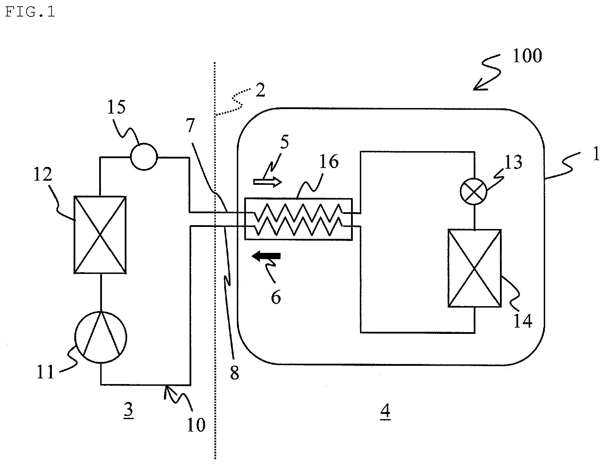

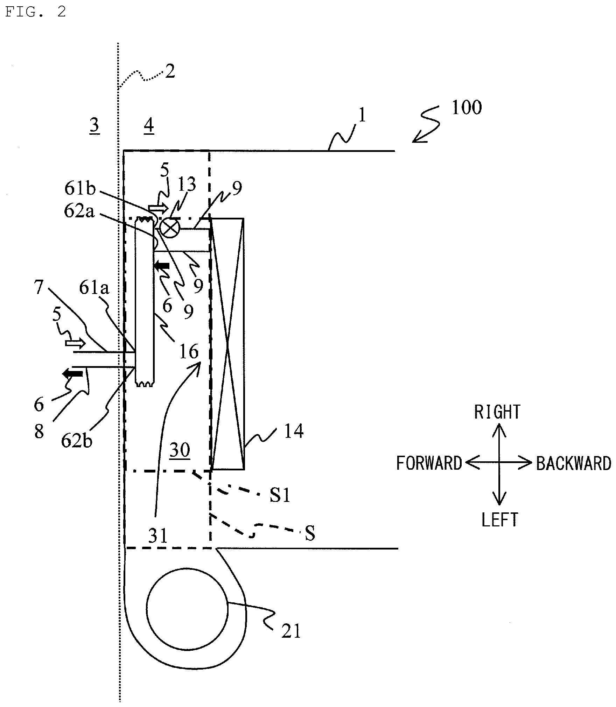

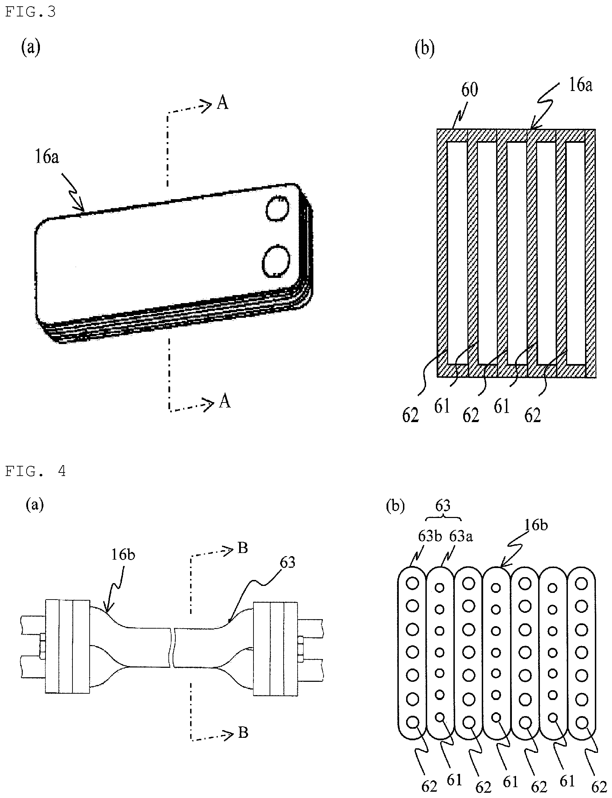

FIG. 1 is a schematic view showing a refrigeration cycle of a vehicle air-conditioning apparatus according to the present embodiment. FIG. 2 is a pattern diagram showing a disposition example of an internal heat exchanger. FIG. 3 is schematic views showing examples of a lamination type of internal heat exchanger in which (a) is a perspective view and (b) is an A-A fracture cross sectional view of (a). As shown in FIGS. 1 and 2, a vehicle air-conditioning apparatus 100 according to the present invention is provided with a case 1 having a ventilation flow path for blowing air therein and disposed in a vehicle interior 4; a blower unit 21 configure to form the blowing air; an evaporator 14 performing heat exchange with a blowing air 31; and an internal heat exchanger 16 performing heat exchange between a condensed high-temperature and high-pressure cooling medium in a refrigeration cycle 10 and an evaporated low-temperature and low-pressure cooling medium wherein the internal heat exchanger 16 has, as shown in FIGS. 3(a) and 3(b), a laminate structure in which a high-pressure side cooling medium flow path 61 through which the high-temperature and high-pressure cooling medium is flowed and a low-pressure side cooling medium flow path 62 through which the low-temperature and low-pressure cooling medium is flowed are alternately arranged in a line. As shown in FIG. 2, the internal heat exchanger 16 is stored in the case 1 and disposed in a region S between the evaporator 14 and a firewall 2.

As shown in FIG. 2, the case 1 includes a ventilation flow path 30 for blowing air. The ventilation flow path 30 includes a filter (not shown) and an evaporator 14 arranged therein and a heater core (not shown) arranged according to need. The case 1 serves as a case of HVAC (Heating, Ventilation, and Air-conditioning) used when temperature-regulated blowing air is sent into a vehicle interior. In the blower unit 21, a drive motor (not shown) is driven to rotate a fan (not shown), and thus, to produce the blowing air 31 in the ventilation flow path. Namely, when the fan is rotated, outside air, inside air, or a mixture of inside and outside air is taken in the ventilation flow path by switching of an intake door (not shown), and air is sucked. The blowing air is then purified by passing through a filter (not shown) and thereafter cooled and dehumidified by passing through the evaporator 14. The air flow having passed through the evaporator 14 is sorted to an air flow not passing through a heater core (not shown) and an air flow passing through the heater core by switching of an air mix door (not shown). The air flow not passing through the heater core is cold air, and the air flow passing through the heater core is hot air. The air volume of the air flow passing through the heater core and the air volume of the air flow not passing through the heater core are regulated by an opening and closing angle of the air mix door, and the air flows are thereafter mixed, whereby a temperature of air can be regulated. The converged air flows are sent into the vehicle interior from a blowout port of a defroster, a vent, a side vent, or a foot through a duct (not shown) attached to a case. The blowout port through which the air flow is sent can be suitably selected from among those according to the demands of crews, a temperature distribution in the vehicle interior, and the like.

The firewall 2 partitions the engine room 3 and the vehicle interior 4.

As shown in FIG. 1, the refrigeration cycle 10 includes as components at least a compressor 11, a condenser 12, a receiver 15, an expansion valve 13 as a cooling medium expansion unit, the evaporator 14, and the internal heat exchanger 16. The components are connected through piping. In the refrigeration cycle 10, the cooling medium circulates in order of the compressor 11, the condenser 12, the receiver 15, the internal heat exchanger 16, the expansion valve 13, the internal heat exchanger 16, and the compressor 11. In FIGS. 1 and 2, a white arrow 5 indicates a direction in which a high-temperature and high-pressure cooling medium flows, and a black arrow 6 indicates a direction in which a low-temperature and low-pressure cooling medium flows. In the present embodiment, among the components of the refrigeration cycle 10, the expansion valve 13, the evaporator 14, and the internal heat exchanger 16 are provided in the vehicle interior 4 and arranged in the case 1. The compressor 11, the condenser 12, and the receiver 15 are preferably arranged outside the vehicle interior (the engine room 3 in FIG. 1).

The compressor 11 receives a driving force from an engine or a driving force of a motor driven by an electric power to compress a low-temperature and low-pressure cooling medium in a vaporized state, and thus, to convert the low-temperature and low-pressure cooling medium into a high-temperature and high-pressure cooling medium in a vaporized state.

The condenser 12 condenses the vaporized high-temperature and high-pressure cooling medium, discharged from the compressor 11, by air cooling and converts the vaporized high-temperature and high-pressure cooling medium into the high-temperature and high-pressure cooling medium in a liquefied state.

The receiver 15 is connected to an exit of the condenser 12 and configured to separate the cooling medium condensed by the condenser 12 into a vaporized cooling medium and a liquified cooling medium and sends only the liquified cooling medium to the expansion valve 13 through the internal heat exchanger 16.

The expansion valve 13 decompresses and expands, by squeezing action, the liquified high-temperature and high-pressure cooling medium, which has been condensed by the condenser 12 and subjected to vapor-liquid separation in the receiver 15, to convert the high-temperature and high-pressure cooling medium into the low-temperature and low-pressure cooling medium in a gas-liquid mixed state and, at the same time, regulates the flow rate of the cooling medium.

The evaporator 14 vaporizes the cooling medium converted into a gas/liquid mixture by the expansion valve 13, and blowing air passing through the evaporator 14 is cooled and dehumidified by evaporation heat generated when the cooling medium is vaporized.

As shown in FIG. 3(b), an internal heat exchanger 16a is a so-called lamination type of internal heat exchanger having a laminate structure in which a high-pressure side cooling medium flow path 61 through which a high-temperature and high-pressure cooling medium is flowed and a low-pressure side cooling medium flow path 62 through which a low-temperature and low-pressure cooling medium is flowed are alternately arranged in a line. The lamination type of internal heat exchanger 16a shown in FIGS. 3(a) and 3(b) has a structure in which plates 60 formed by pressing to have a predetermined shape are stacked in the thickness direction and is called a plate type. The internal heat exchanger 16a of plate type performs heat exchange between the cooling medium circulating in the high-pressure side cooling medium flow path 61 and the cooling medium circulating in the low-pressure side cooling medium flow path 62 with heat transmitted to the plates 60. The refrigeration capacity of the refrigeration cycle 10 is enhanced by heat exchange.

In the vehicle air-conditioning apparatus 100 according to the present embodiment, the low-pressure side cooling medium flow path 62 is preferably located at the outermost side of the laminate structure. When the high-temperature and high-pressure cooling medium and the low-temperature and low-pressure cooling medium have the same mass, the volume of the low-pressure cooling medium is larger than the volume of the high-temperature and high-pressure cooling medium. Thus, when the cooling media in the respective states are flowed in the cooling medium flow paths having the same cross section, the passage flow rate in the flow path of the low-temperature and low-pressure cooling medium is faster than that of the high-temperature and high-pressure cooling medium, so that the low-temperature and low-pressure cooling medium easily receives passage resistance. Thus, in the internal heat exchanger 16a having the laminate structure in which the high-pressure side cooling medium flow path 61 and the low-pressure side cooling medium flow path 62 are alternately arranged in a line, the low-pressure side cooling medium flow path 62 is located at the outermost side of the laminate structure, whereby the sum of the flow path cross section of the low-pressure side cooling medium flow path 62 can be made larger than the sum of the flow path cross section of the high-pressure side cooling medium flow path 61, and therefore, the flow resistance of the low-temperature and low-pressure cooling medium can be reduced. Moreover, an amount of dew condensation water generated on a surface of the internal heat exchanger 16a can be reduced. In FIGS. 3(a) and 3(b), the six plates 60 are stacked. The plates 60 include the five flow paths in total including the two high-pressure side cooling medium flow paths 61 and the three low-pressure side cooling medium flow paths 62. However, the present invention is not limited to the number of the stacked plates 60 or the number of the stacked flow paths 61 and 62.

FIG. 4 is schematic views showing other examples of the lamination type of internal heat exchanger in which (a) is a front view and (b) is a B-B fracture cross sectional view of (a). In a lamination type of internal heat exchanger 16b shown in FIGS. 4 (a) and 4(b), a plurality of flow paths are provided in a single flat tube 63. The internal heat exchanger 16b has a structure in which the flat tubes 63 are stacked in the thickness direction and is called a tube type of internal heat exchanger. In the internal heat exchanger 16b of the tube type, as shown in FIG. 4(b), the flat tubes 63a provided with the high-pressure side cooling medium flow path 61 and the flat tube 63b provided with the low-pressure side cooling medium flow path 62 are alternately arranged in a line. The internal heat exchanger 16b of tube type operates similarly to the internal heat exchanger 16a of plate type except that heat exchange is performed by heat transmitted to the flat tube 63. In the internal heat exchanger 16b of tube type, as in the internal heat exchanger 16a of plate type, the low-pressure side cooling medium flow path 62 is preferably located at the outermost side of the laminate structure. In the example shown in FIGS. 4(a) and 4(b), the seven flat tubes 63 are stacked, and the seven flow paths are provided per the single flat tube 63; however, the present invention is not limited to the number of the stacked tubes 63 or the number of the stacked flow paths 61 and 62.

The disposition of the internal heat exchanger 16 will be explained with reference to FIG. 2. The internal heat exchanger 16 is stored in the case 1, and, at the same time, disposed in a region S between the evaporator 14 and the firewall 2. The region S between the evaporator 14 and the firewall 2 is a space of an internal space of the case 1, which is located to a forward position of a vehicle relative to the evaporator 14. When the internal heat exchanger 16 is disposed in the case 1, the internal heat exchanger 16 is integrated with HVAC, so that the number of processes of mounting the internal heat exchanger 16 can be reduced, and, at the same time, the internal heat exchanger 16 is easily attachable and can be disposed to a space-saving manner. The internal heat exchanger 16 is disposed in the region S between the evaporator 14 and the firewall 2, whereby the internal heat exchanger 16 can be disposed without affecting a basic configuration of a conventional HVAC. In the vehicle air-conditioning apparatus 100 according to the present embodiment, the internal heat exchanger 16 is preferably located in a projection plane S1 where the evaporator 14 is projected to a forward direction of a vehicle. The location in the projection plane S1 on which the evaporator 14 is projected to the forward direction of a vehicle means the location in a region, which is the shadow of the evaporator 14, in the case where the evaporator 14 is displayed from the backward direction to the forward direction of the vehicle. When the internal heat exchanger 16 is disposed in the projection plane S1 on which the evaporator 14 is projected to the forward direction of a vehicle, the internal heat exchanger 16 can be disposed to a more space-saving manner. The piping length between the expansion valve 13 or the evaporator 14 and the internal heat exchanger 16 can be reduced. When the evaporator 14 is viewed from the front, the internal heat exchanger 16 does not protrude from the outer shape of the evaporator 14, and therefore, the case 1 is not required to have an unnecessary protruding portion. The case 1 itself can thus be reduced in size.

As shown in FIG. 2, an exit 61b of the high-pressure side cooling medium flow path of the internal heat exchanger 16 and an entrance 62a of the low-pressure side cooling medium flow path of the internal heat exchanger 16 are adjacent to each other, the expansion valve 13 is connected to the exit 61b of the high-pressure side cooling medium flow path of the internal heat exchanger 16 through a plate (not shown) or piping (not shown), and the entrance 62a of the low-pressure side cooling medium flow path of the internal heat exchanger 16 is connected to the evaporator 14 through a plate (not shown) or piping (not shown). On the other hand, the entrance 61a of the high-pressure side cooling medium flow path of the internal heat exchanger 16 and the exit 62b of the low-pressure side cooling medium flow path of the internal heat exchanger 16 are adjacent to each other, and the entrance 61a of the high-pressure side cooling medium flow path of the internal heat exchanger 16 is connected to the receiver 15 through a plate (not shown) or a piping 7 (see, FIG. 1). The exit 62b of the low-pressure side cooling medium flow path of the internal heat exchanger 16 is connected to the compressor 11 through a plate (not shown) or a piping 8 (see, FIG. 1).

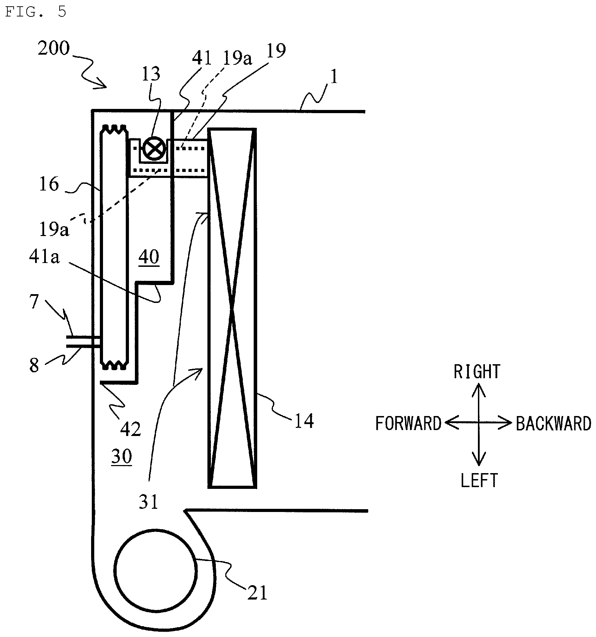

FIG. 5 is a schematic view showing a disposition example of the internal heat exchanger in a semi-center type of vehicle air-conditioning apparatus. A vehicle air-conditioning apparatus 200 shown in FIG. 5 is so-called a semi-center type of vehicle air-conditioning apparatus in which the blower unit 21 is disposed to the left side in the vehicle width direction of the evaporator 14. In FIG. 5, although the blower unit 21 is disposed to the left side in the vehicle width direction of the evaporator 14, the present invention is not limited thereto, and the blower unit 21 may be disposed to the right side in the vehicle width direction of the evaporator 14.

As shown in FIG. 5, in the vehicle air-conditioning apparatus 200 according to the present embodiment, it is preferable that the case 1 has a partition wall 41, and the internal heat exchanger 16 is disposed in a space 40 separated from the ventilation flow path 30 by the partition wall 41. Propagation of flow noise of the internal heat exchanger 16 can be suppressed. Since the internal heat exchanger 16 is not in contact with the blowing air 31, the efficiency of heat exchange is further enhanced, and, at the same time, an amount of dew condensation water generated on a surface of the internal heat exchanger 16 can be reduced. The smaller the amount of the generated dew concentration water, the more easily a drain channel is designed. The expansion valve 13 is preferably disposed in a space 40 separated from the ventilation flow path 30. Propagation of a sound generated from the expansion valve 13 can be suppressed. It is preferable that the partition wall 41 has in part a drain outlet 42 configured to discharge generated dew condensation water. The drain outlet 42 is provided in a lower position of the vehicle.

In the semi-center type of vehicle air-conditioning apparatus 200, the partition wall 41 preferably serves as a rectifying guide of the blowing air 31. As shown in FIG. 5, for example, in the form of the partition wall 41 as the rectifying guide, adjustment is performed by providing a step 41a so that the farther from the blower unit 21, the shorter a distance between the partition wall 41 and the evaporator 14. By virtue of the provision of the step 41a, the farther from the blower unit 21, the narrower the ventilation flow path 30; therefore, the wind velocity of the blowing air 31 passing through the evaporator 14 is uniformized, and the volumes of air blown out from left and right blowout ports can be balanced. In the prior art, although the space 40 formed by providing a rectifying guide is a dead space, the internal heat exchanger 16 is disposed in the space 40, whereby the space can be effectively used.

In the semi-center type of vehicle air-conditioning apparatus 200, it is preferable that in the vehicle width direction, the expansion valve 13 is disposed to the opposite side to which the blower unit 21 is disposed. In FIG. 5, the blower unit 21 is disposed to the left side in the vehicle width direction, and the expansion valve 13 is disposed to the right side in the vehicle width direction. Although not illustrated, when the blower unit 21 is disposed to the right side in the vehicle width direction, the expansion valve 13 is disposed to the left side in the vehicle width direction. In the form (not shown) in which in the vehicle width direction, the expansion valve 13 is disposed to the same side as the side on which the blower unit 21 is disposed, when the expansion valve 13 is to be disposed so as to prevent inhibition of the flow of the blowing air 31, an unnecessary protruding portion should be provided in the case 1. Meanwhile, as shown in FIG. 5, when in the vehicle width direction, the expansion valve 13 is disposed to the side opposite to the side to which the blower unit 21 is disposed, a dead space can be effectively used, thereby making it possible to contribute to space saving.

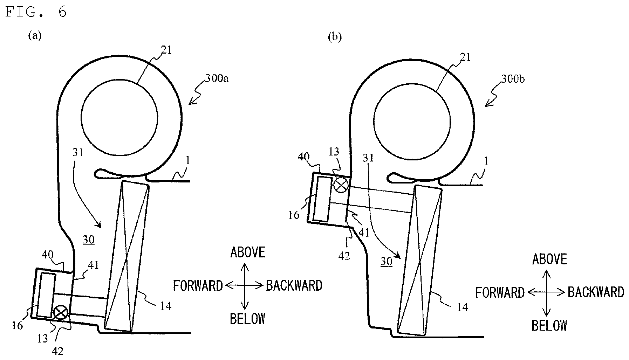

FIG. 6 is schematic views showing disposition examples of the internal heat exchanger in a full-center type of vehicle air-conditioning apparatus in which (a) shows a form in which the internal heat exchanger is disposed in a lower stage and (b) shows a form in which the internal heat exchanger is disposed in an intermediate stage. Vehicle air-conditioning apparatuses 300a and 300b shown in FIGS. 6(a) and 6(b) are so-called full-center type of vehicle air-conditioning apparatuses in which the blower unit 21 is disposed above the evaporator 14. As in the vehicle air-conditioning apparatus 200, in the full-center type of vehicle air-conditioning apparatuses 300a and 300b, it is preferable that the case 1 has a partition wall 41, and the internal heat exchanger 16 is disposed in the space 40 separated from the ventilation flow path 30 by the partition wall 41. Since the internal heat exchanger 16 is not in contact with the blowing air 31, the efficiency of heat exchange is further enhanced, and, at the same time, an amount of dew condensation water generated on a surface of the internal heat exchanger 16 can be reduced.

In the full-center type of vehicle air-conditioning apparatuses 300a and 300b, it is preferable that the internal heat exchanger 16 is disposed outside the ventilation flow path 30 communicating from the blower unit 21 to the evaporator 14. When the internal heat exchanger 16 is thus disposed, the flow of the blowing air is not hampered. It is possible to prevent occurrence of noise due to the fact that the blowing air is in contact with the internal heat exchanger 16. As the disposition example of the internal heat exchanger 16, in the form shown in FIG. 6(a), the internal heat exchanger is disposed to the lower stage, and in the form shown in FIG. 6(b), the internal heat exchanger is disposed to the intermediate stage. However, the present invention is not limited to those forms.

In a conventional vehicle air-conditioning apparatus, there has been known one in which an accumulator is connected between an evaporator and an internal heat exchanger (for example, see Patent Literature 2, paragraph 0003). In the vehicle air-conditioning apparatus 100 according to the present embodiment, as shown in FIG. 2, it is preferable that the evaporator 14 and the internal heat exchanger 16 are connected through piping 9 without providing the accumulator. As another example, as shown in FIG. 5, the evaporator 14 and the internal heat exchanger 16 may be connected through a plate 19. The plate 19 includes a flow path 19a corresponding to the piping 9. The evaporator 14 and the internal heat exchanger 16 may be connected through the piping 9 and the plate 19 (not shown). According to this constitution, the evaporator 14 and the internal heat exchanger 16 can be closer to each other, and the case 1 can be further miniaturized.

Although the description has been performed while premising that the engine room 3 is disposed to the forward position of the vehicle, the present invention is applicable to a vehicle in which the engine room 3 is disposed to a backward portion of the vehicle as in a so-called rear engine vehicle. In this case, an equipment storage chamber (not shown) storing a washer tank and the like is disposed to the forward position of the vehicle, and the equipment storage chamber and the vehicle interior 4 are partitioned by a toe board (not shown). The internal heat exchanger 16 is disposed in the case 1 disposed in the vehicle interior 4 and in the region between the evaporator 14 and the toe board. According to this constitution, the internal heat exchanger 16 can be mounted in the vehicle without newly disposing the internal heat exchanger 16 in the equipment storage chamber.

The present invention is applicable to a vehicle driven by electric power without providing an engine. In the vehicle driven by electric power, the equipment storage chamber and the vehicle interior 4 arranged in the forward position of the vehicle are partitioned by the toe board, and the internal heat exchanger 16 is stored in the case 1 disposed in the vehicle interior 4 and disposed in the region between the evaporator 14 and the toe board. According to this constitution, the internal heat exchanger 16 can be mounted in the vehicle without newly disposing the internal heat exchanger 16 in the equipment storage chamber.

### Reference Signs List

1 Case
2 Firewall
3 Engine room
4 Vehicle interior
5 Direction in which high-temperature and high-pressure cooling medium flows
6 Direction in which low-temperature and low-pressure cooling medium flows
7, 8, 9 Piping
10 Refrigeration cycle
11 Compressor
12 Condenser
13 Expansion valve
14 Evaporator
15 Receiver
16, 16a, 16b Internal heat exchanger
19 Plate
19a Flow path
21 Blower unit
30 Ventilation flow path
31 Blowing air
40 Space
41 Partition wall
41a Step
42 Drain outlet
60 Plate
61 High-pressure side cooling medium flow path
62 Low-pressure side cooling medium flow path
63, 63a, 63b Flat tube
61a Entrance of high-pressure side cooling medium flow path
61b Exit of high-pressure side cooling medium flow path
62a Entrance of low-pressure side cooling medium flow path
62b Exit of low-pressure side cooling medium flow path
100, 200, 300a, 300b Vehicle air-conditioning apparatus

## Claims

1. A vehicle air-conditioning apparatus (100) comprising:
a case (1) having a ventilation flow path for blowing air therein and disposed in a vehicle interior (4) ; a blower unit (21) configured to form the blowing air (31) ; an evaporator (14) performing heat exchange with the blowing air;
an internal heat exchanger (16) performing heat exchange between a condensed high-temperature and high-pressure cooling medium in a refrigeration cycle (10) and an evaporated low-temperature and low-pressure cooling medium; and
a cooling medium expansion unit (13) disposed between the internal heat exchanger (16) and the evaporator (14) ; **characterized in that** the internal heat exchanger (16) has a laminate structure in which a high-pressure side cooling medium flow path (61) through which the high-temperature and high-pressure cooling medium is flowed and a low-pressure side cooling medium flow path (62) through which the low-temperature and low-pressure cooling medium is flowed are alternately arranged in a line, and the internal heat exchanger (16) is stored in the case (1) and disposed in a region between the evaporator (14) and a firewall or a toe board, wherein the case has a partition wall (41), and the internal heat exchanger (16) is disposed in a space separated from the ventilation flow path by the partition wall (41).

2. The vehicle air-conditioning apparatus according to claim 1, wherein the low-pressure side cooling medium (62) flow path is located at the outermost side of the laminate structure.

3. The vehicle air-conditioning apparatus according to any one of claims 1 or 2, wherein the blower unit (21) is disposed above the evaporator (14), and the internal heat exchanger (16) is disposed outside a ventilation flow path communicating from the blower unit (21) to the evaporator (14).

4. The vehicle air-conditioning apparatus according to claim 1, wherein the blower unit (21) is disposed to the right side or left side in a vehicle width direction of the evaporator (14), and the partition wall (41) serves as a rectifying guide of the blowing air.

5. The vehicle air-conditioning apparatus according to any one of claims 1 to 2 and 4, wherein the blower unit (21) is disposed to the right side or left side in the vehicle width direction of the evaporator, and in the vehicle width direction, the cooling medium expansion unit (13) is disposed to the opposite side to which the blower unit (21) is disposed.

6. The vehicle air-conditioning apparatus according to any one of claims 1 to 5, wherein the internal heat exchanger (16) and the evaporator (14) are connected to each other through a plate and/or a piping.

## Patentansprüche

1. Fahrzeugklimaanlage (100), umfassend:
ein Gehäuse (1), das einen Belüftungsströmungspfad für darin befindliche Gebläseluft aufweist und sich in einem Fahrzeuginneren (4) befindet;
eine Gebläseeinheit (21), die konfiguriert ist, um die Gebläseluft (31) zu bilden;
einen Verdampfer (14), um einen Wärmetausch mit der Gebläseluft durchzuführen;
einen internen Wärmetauscher (16), um einen Wärmetausch zwischen einem kondensierten Hochtemperatur- und Hochdruckkühlmedium in einem Kühlkreislauf (10) und einem verdampften Niedrigtemperatur- und Niedrigdruckkühlmedium durchzuführen; und
eine Kühlmediumexpansionseinheit (13), die sich zwischen dem internen Wärmetauscher (16) und dem Verdampfer (14) befindet,
**dadurch gekennzeichnet, dass**
der interne Wärmetauscher (16) eine Laminarstruktur hat, wobei ein hochdruckseitiger Kühlmediumströmungspfad (61), über den das Hochtemperatur- und Hochdruckkühlmedium fließt, und ein niedrigdruckseitiger Kühlmediumströmungspfad (62), über den das Niedrigtemperatur- und Niedrigdruckkühlmedium fließt, abwechselnd in einer Reihe angeordnet sind, wobei der interne Wärmetauscher (16) im Gehäuse (1) untergebracht ist und sich in einem Bereich zwischen dem Verdampfer (14) und einer Feuerwand oder einem Bordbrett befindet, wobei das Gehäuse eine Trennwand (41) aufweist und sich der interne Wärmetauscher (16) in einem Raum befindet, der vom Belüftungsströmungspfad durch die Trennwand (41) getrennt ist.

2. Fahrzeugklimaanlage nach Anspruch 1, bei der sich der niedrigdruckseitige Kühlmediumpfad (62) an der äußersten Seite der Laminarstruktur befindet.

3. Fahrzeugklimaanlage nach einem der Ansprüche 1 oder 2, bei der sich die Gebläseeinheit (21) oberhalb des Verdampfers (14) befindet, und wobei sich der interne Wärmetauscher (16) außerhalb eines Belüftungsströmungspfads befindet, der die Gebläseeinheit (21) mit dem Verdampfer (14) verbindet.

4. Fahrzeugklimaanlage nach Anspruch 1, bei der sich die Gebläseeinheit (21) in einem Fahrzeug in einer Richtung der Fahrzeugbreite auf der rechten oder linken Seite des Verdampfers (14) befindet, und wobei die Trennwand (41) als funktionsverbessernde Führung für die Gebläseluft dient.

5. Fahrzeugklimaanlage nach einem der Ansprüche 1 bis 2 und 4, bei der sich die Gebläseeinheit (21) in der Richtung der Fahrzeugbreite auf der rechten oder linken Seite des Verdampfers befindet, und wobei sich in der Richtung der Fahrzeugbreite die Kühlmediumexpansionseinheit (13) auf der gegenüberliegenden Seite zur Gebläseeinheit (21) befindet.

6. Fahrzeugklimaanlage nach einem der Ansprüche 1 bis 5, bei der der interne Wärmetauscher (16) und der Verdampfer (14) durch eine Platte und/oder ein Rohr miteinander verbunden sind.

## Revendications

1. Dispositif (100) de climatisation de véhicule, comprenant :
un boîtier (1) comportant un circuit de ventilation pour y souffler de l'air et disposé dans un intérieur (4) de véhicule ;
une unité de pulseur (21) configurée pour créer l'air de soufflage (31) ;
un évaporateur (14) effectuant l'échange thermique avec l'air pulsé ;
un échangeur thermique (16) interne effectuant un échange thermique entre un agent de refroidissement condensé à haute température et haute pression dans un cycle (10) de réfrigération et un agent de refroidissement évaporé à basse température et basse pression ; et
une unité d'expansion (13) de l'agent de refroidissement disposée entre l'échangeur thermique (16) interne et de l'évaporateur (14), **caractérisé en ce que** l'échangeur thermique (16) interne présente une structure en couches dans laquelle un circuit (61) d'agent de refroidissement côté haute pression, par lequel on fait circuler l'agent de refroidissement à haute température et haute pression, et un circuit (62) d'agent de refroidissement côté basse pression, par lequel on fait circuler l'agent de refroidissement à basse température et basse pression, sont alignés en alternance, et **en ce que** l'échangeur thermique (16) interne est stocké dans le boîtier (1) et disposé dans une zone entre l'évaporateur (14) et un tablier ou un pédalier,
dans lequel le boîtier comporte une cloison (41) et l'échangeur thermique (16) interne est disposé dans un espace séparé du circuit de ventilation par la cloison (41).

2. Dispositif de climatisation de véhicule selon la revendication 1, dans lequel le circuit (62) d'agent de refroidissement côté basse pression est situé sur le côté le plus à l'extérieur de la structure en couches.

3. Dispositif de climatisation de véhicule selon la revendication 1 ou 2, dans lequel l'unité de pulseur (21) est disposée au-dessus de l'évaporateur (14) et l'échangeur thermique (16) interne est disposé à l'extérieur du circuit de ventilation faisant communiquer l'unité de pulseur (21) avec l'évaporateur (14).

4. Dispositif de climatisation de véhicule selon la revendication 1, dans lequel l'unité de pulseur (21) est disposée sur le côté droit ou le côté gauche, dans le sens de la largeur du véhicule, de l'évaporateur (14) et la cloison (41) sert de guide pour redresser l'air pulsé.

5. Dispositif de climatisation de véhicule selon l'une quelconque des revendications 1, 2 et 4, dans lequel l'unité de pulseur (21) est disposée sur le côté droit ou le côté gauche, dans le sens de la largeur du véhicule, de l'évaporateur et, dans le sens de la largeur du véhicule, l'unité d'expansion (13) de l'agent de refroidissement est disposée du côté opposé à celui où est disposée l'unité de pulseur (21).

6. Dispositif de climatisation de véhicule selon l'une quelconque des revendications 1 à 5, dans lequel l'échangeur thermique (16) interne et l'évaporateur (14) sont raccordés l'un à l'autre par une plaque et/ou une tuyauterie.
